# EUROPEAN PATENT SPECIFICATION

(11) **EP 1 155 931 B1**
(45) Date of publication and mention of the grant of the patent: **15.12.2004**
(21) Application number: 01110692.9
(22) Date of filing: 02.05.2001
(51) Int. Cl.: B60S 1/04, B62D 25/08

(54) **Vehicle cowl construction**
Fahrzeugvorderzusammenbau
Structure d'élément avant pour véhicule

(30) Priority: 17.05.2000 JP 2000145019
(43) Date of publication of application: 21.11.2001
(73) Proprietor: TOYOTA JIDOSHA KABUSHIKI KAISHA, Toyota-shi, Aichi-ken 471-8571 (JP)
(72) Inventor: Hamada, Makoto, Toyota Jidosha Kabushiki Kaisha, Toyota-shi, Aichi-ken 471-8571 (JP); Hosoya, Toshiaki, Toyota Jidosha Kabushiki Kaisha, Toyota-shi, Aichi-ken 471-8571 (JP); Matuyama, Narihide, Toyota Jidosha Kabushiki K., Toyota-shi, Aichi-ken 471-8571 (JP)
(74) Representative: Pellmann, Hans-Bernd, Dipl.-Ing.

(56) References cited:
- EP-A- 0 947 401
- GB-A- 2 014 517
- US-A- 2 885 709
- US-A- 3 135 982
- US-A- 3 418 677
- US-A- 4 874 199
- US-A- 5 005 897
- PATENT ABSTRACTS OF JAPAN vol. 1999, no. 11, 30 September 1999 (1999-09-30) & JP 11 165613 A (TOYOTA MOTOR CORP), 22 June 1999 (1999-06-22)

## Description

### BACKGROUND OF THE INVENTION

### 1.Field of the Invention

The invention relates to a vehicle cowl structure according to the preamble of claim 1. More particularly, the invention relates to a vehicle cowl structure of an automobile provided with a wiper device.

### 2.Description of Related Art

An example of a vehicle cowl structure of an automobile is disclosed in JP-A-11-165654 and JP-A-11-165613.

Referring to Fig. 13, in a construction disclosed in Japanese JP-A-11-165654, a sealing member 100 is supported by a plastic hood seal attaching means 102 exhibiting a predetermined rigidity. When a load acts on a hood 104 from a generally upward direction and then, the load further acts on the hood seal attaching means 102 via the sealing member 100, a rib 106 of the hood seal attaching means 102 fractures at a point 106A rearward of the vehicle body for energy absorption. In addition, the front portion of the hood seal attaching means 102 bends substantially downward together with a flange 108A of a cowl front 108 such that interference between the hood 104 and the rib 106 is reduced.

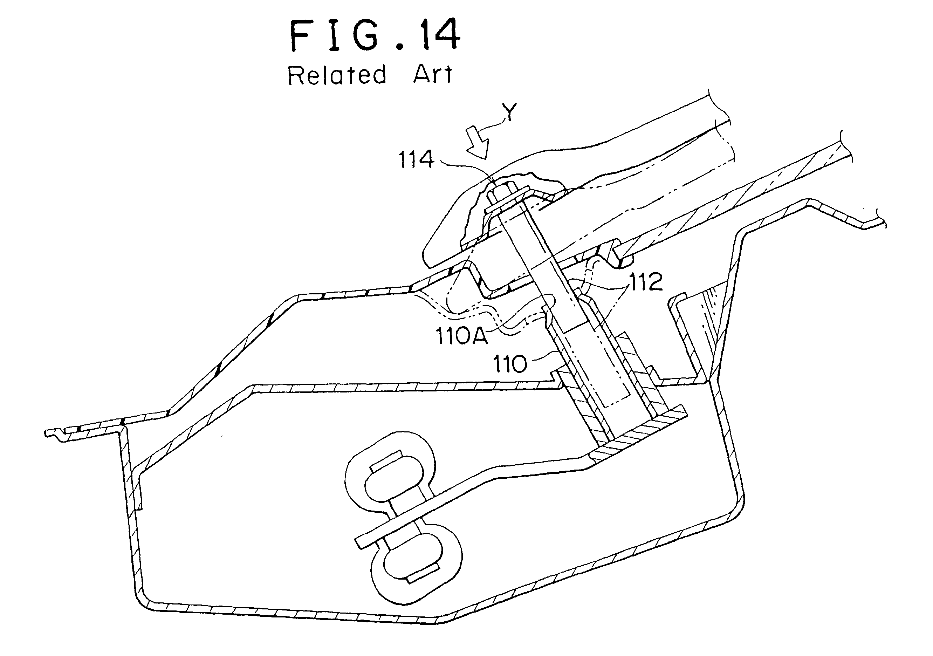

Referring to Fig. 14, in a construction disclosed in JP-A-165613, a wiper pivot under 110 is made up of a pipe. The lower end of a wiper pivot upper 112 is inserted into the upper end opening 110A of the wiper pivot under 110. The lower end of the wiper pivot upper 112 is secured to the upper end opening 110A of the wiper pivot under 110 through caulking. The caulking is designed to be disengaged when the load exceeding a predetermined level acts on a wiper pivot 114 in the direction of the wiper pivot axis (in the direction of arrow Y). When the caulking is disengaged, the wiper pivot upper 112 moves into the wiper pivot under 110 as shown in chain double-dashed lines in Fig. 14.

Though a given level of energy absorbing effect can be obtained from these constructions, however, it is desirable to provide a vehicle cowl structure capable of even further enhancing energy absorbing effect.

A generic vehicle cowl structure is known from EP-A-0 947 401 and comprises a cowl louver that has an abutting portion, and a wiper device that includes supporting means provided for supporting the abutting portions at least when said cowl louver is displaced. Energy absorbing means provides at least a part of at least one of the abutting portion and the supporting means. The wiper device includes right and left wiper pivots.

### SUMMARY OF THE INVENTION

The object of the invention is to provide a vehicle cowl structure capable of improving energy absorbing effect.

This object is achieved by vehicle cowl structure according to claim 1.

Advantageous further developments are set out in the dependent claims.

The impact load acting on the cowl louver from generally an upward direction is transmitted from the cowl louver to the wiper device through the abutting portions of the cowl louver and the supporting means for supporting the abutting portions. In addition, a positive support is provided for the cowl louver with respect to the wiper device by the supporting means. This allows the cowl louver or the supporting means to invariably deform whenever a load is applied to the wiper device or an area surrounding the wiper device, and energy is thereby effectively absorbed. As a result, the energy absorbing effect can be enhanced.

Energy absorbing means provides at least a part of at least one of said abutting portionsand said supporting means.

The wiper device used in this arrangement is to be provided with a connecting member that is installed so as to extend in a direction of vehicle width and connects a right and a left wiper pivot portion. The connecting member is used to support the cowl louver.

Since the connecting member supports the cowl louver, the aforementioned arrangement further enhances the energy absorbing effect and, at the same time, provides a positive support for the cowl louver.

The wiper device may be supported by a vehicle body. The energy absorbing means are provided in a transmission path along which a load applied from the outside of a vehicle to the cowl louver is transmitted to the vehicle body through the abutting portions and the supporting means. In this case, energy is effectively absorbed by the energy absorbing means provided in the transmission path.

Moreover, the supporting means may be adapted to restrict a displacement of the cowl louver. In this case, when the cowl louver is displaced, the cowl louver or the supporting means deforms because the displacement is restricted by the supporting means.

The abutting portions and the supporting means may, instead, be provided at least at an area near a wiper pivot.

Since the cowl louver is supported around the wiper pivot, the cowl louver or supporting means will deform upon exertion of the impact load, thus absorbing the energy effectively.

It may further be possible that the wiper device is supported by a vehicle body at least in the area around the wiper pivot.

In this case, the impact load applied from generally above will positively be transmitted from the cowl louver to the vehicle body via the wiper device.

The cowl louver may be provided with a covering portion that covers the upper part of the wiper pivots.

In this construction, the covering portion covers the upper portion of the wiper pivots, thus improving the outer appearance when the wipers are stored. Further, since the covering portion exists between a colliding body and a wiper pivot, it is prevented that the colliding body touches the upper end portion of the wiper pivot. As a result, the shock that the colliding body may receive is reduced, when the wiper pivot moves generally downward.

The covering portion may be rotatably and, at the same time, integrally mounted in the cowl louver. Or, it may be a member that can be attached to and removed from the cowl louver.

If the covering portion is rotatable relative to the cowl louver and, at the same time, integrated thereto, there is no need of adding a new part as the covering portion. Meanwhile, if the covering portion is formed to be attached to and removed from the cowl louver, complicated die construction for the cowl louver can be prevented as compared with the case in which the covering portion is integrated with the cowl louver.

The wiper pivots may be designed to slide downward when it receives a impact load from an upward direction.

In this case, additional energy is absorbed by the sliding action of the wiper pivots, contributing to an even greater energy absorbing effect.

An arrangement is also possible, in which at least a front portion of the cowl louver is substantially covered by a rear edge portion of a hood.

This arrangement results in the enhanced outer appearance when the wipers are stored.

In still other arrangement, the cowl louver may be provided with a plurality of ribs that are placed at predetermined intervals along a vehicle width direction and extend in a longitudinal direction of the vehicle body at a position close to a bottom surface of the rear edge portion of the hood.

In this arrangement, the rear end portion of the hood abuts against the ribs in the cowl louver so that the ribs deform as intended, allowing impact energy received from a certain colliding body to be effectively absorbed. As a result, energy absorbing effect can be improved. Such a construction improves the energy absorbing effect without diminishing the area of an opening for outside air intake in the cowl louver.

It is further possible that the cowl louver is provided with a plurality of ribs that are placed at predetermined intervals along the vehicle width direction and extend in the longitudinal direction of the vehicle body. Such a construction improves the energy absorbing effect without diminishing the area of an opening for outside air intake in the cowl louver.

In each of all the embodiments, at least part of the cowl louver may be installed generally upward of the wiper device.

In this construction, it is further possible that the impact when a colliding body collides a wiper pivot is reduced, because the colliding body collides the cowl louver before the colliding body collides the wiper pivot.

### BRIEF DESCRIPTION OF THE DRAWINGS

Fig. 1 is a sectional view along the line 1-1 of Fig. 4.
Fig. 2 is an explanatory view showing the operation of a vehicle cowl structure of the first embodiment according to the invention.
Fig. 3 is a perspective view of a wiper link assembly of the vehicle cowl structure of the first embodiment according to the invention, which is viewed from the diagonal front direction of the vehicle.
Fig. 4 is a perspective view of the vehicle cowl structure of the first embodiment according to the invention, which is viewed from the diagonal front direction of a vehicle.
Fig. 5 is a sectional view along the line 5-5 of Fig. 4.
Fig. 6 is a sectional view along the line 6-6 of Fig. 7.
Fig. 7 is a perspective view of the vehicle cowl structure of the second embodiment according to the invention, which is viewed from the diagonal front direction of a vehicle.
Fig. 8 is a sectional view along the line 8-8 of Fig. 9.
Fig. 9 is a perspective view of the vehicle cowl structure of the third embodiment according to the invention, which is viewed from the diagonal front direction of a vehicle.
Fig. 10 is a sectional view corresponding to Fig. 1, showing the vehicle cowl structure of the fourth embodiment according to this invention.
Fig. 11 is a perspective view showing a cowl louver of the vehicle cowl structure of the fourth embodiment according to the invention, which is viewed from the diagonal front direction of a vehicle.
Fig. 12 is a sectional view corresponding to Fig. 1, showing a modified example of the vehicle cowl structure of the fourth embodiment according to this invention.
Fig. 13 is a side sectional view of a vehicle cowl structure.
Fig. 14 is a side sectional view of a vehicle cowl structure.

### DETAILED DESCRIPTION OF THE PREFERRED EMBODIMENTS

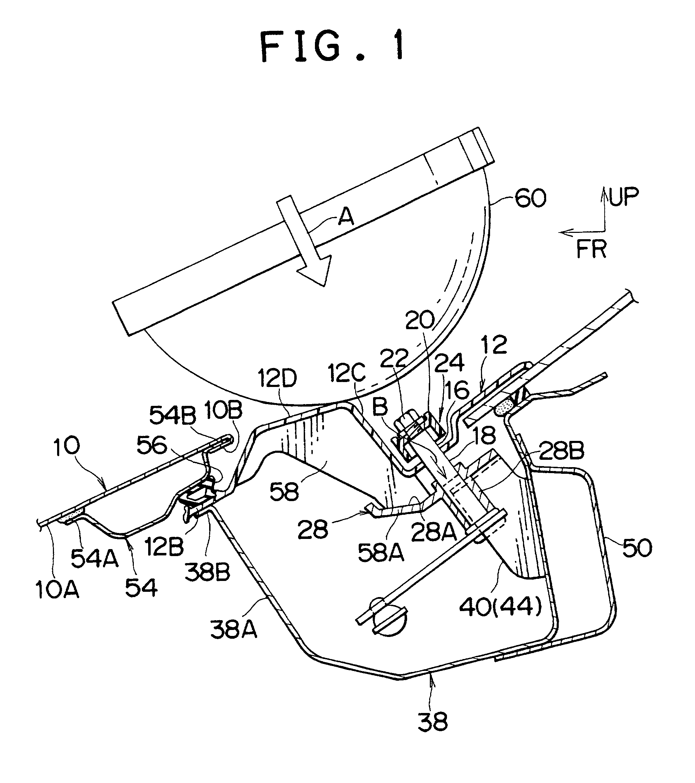

In Figs. 1 to 12, the arrow marked with FR indicates the direction forward of a vehicle and that marked with UP indicates the direction upward of the vehicle.

### ( First Embodiment )

A first embodiment of the vehicle cowl structure according to the invention will be explained with reference to Figs. 1 through 4.

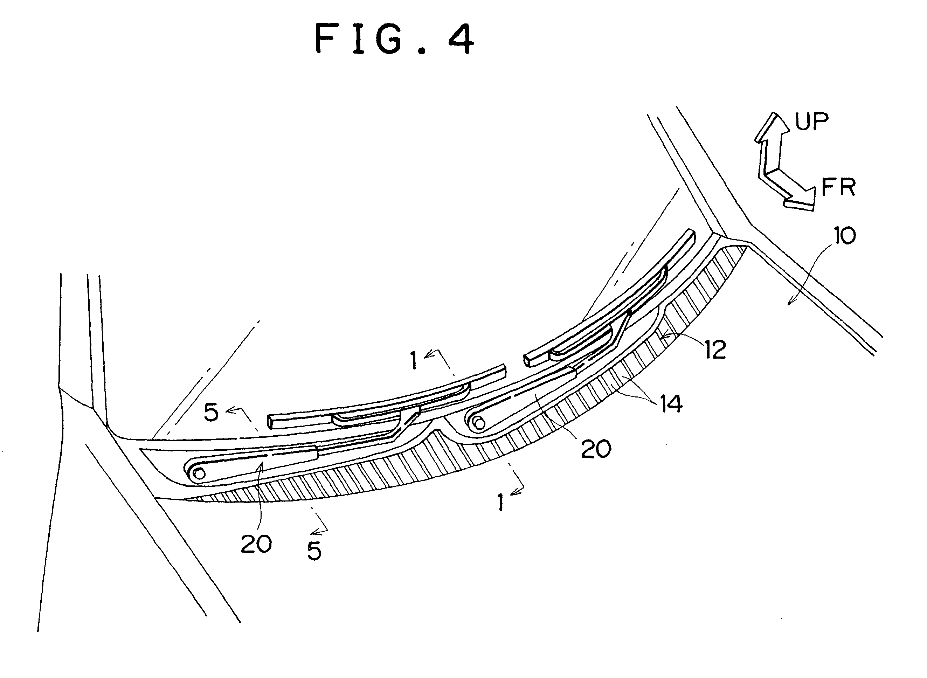

Referring to Fig. 4, a cowl louver 12 made of plastic is provided at the rear end of a hood 10 of the vehicle body in the first embodiment. A plurality of slits 14 that extend in the longitudinal direction of the vehicle body are formed in the cowl louver 12 at predetermined intervals along the width of the vehicle body. Outside air is introduced through those slits 14.

Referring to Fig.1, a through hole 16 is formed in the cowl louver 12. A wiper arm assembly 20 is secured with a bolt 22 to the upper end portion of a wiper pivot 18 that passes through the through hole 16. The wiper arm assembly 20 constitutes a part of a wiper device. In addition, a wiper link assembly 24 is provided downward of the cowl louver 12.

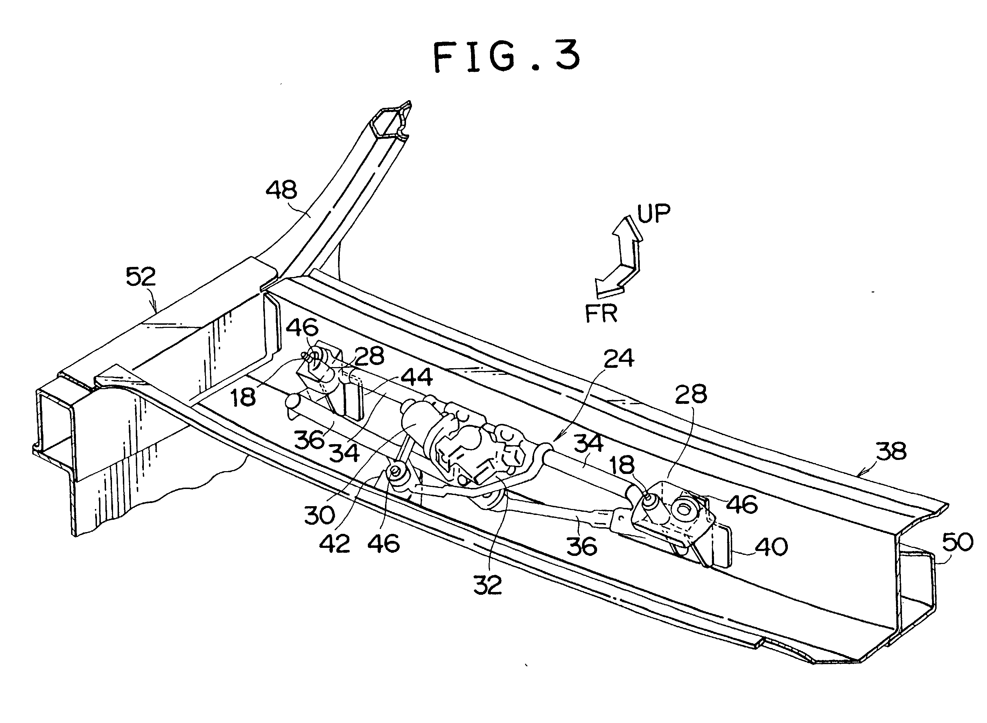

Referring to Fig. 3, the wiper link assembly 24 is provided with pivot axis supporting members 28, a motor supporting member 32, rods 34, and links 36. The pivot axis supporting members 28 serve as supporting means that supports the wiper pivots 18. The motor supporting member 32 supports a motor 30. The rods 34 connect the left and right pivot axis supporting members 28. The links 36 serve to rotate the left and right wiper pivots 18.

The wiper link assembly 24 is secured through bolts 46 to brackets 40, 42, 44 each welded to a cowl panel 38.

The cowl panel 38 connects a front pillar 48 on the right side of the vehicle and a front pillar (not shown) on the left side of the vehicle. A cowl reinforcement 50 is welded to the rear side of the cowl panel 38 along the width of the vehicle. A closed-section structure that forms a frame of the vehicle body is defined by the cowl panel 38 and the cowl reinforcement 50. In addition, cowl side members 52 extends from the front pillars 48 toward the front of the vehicle on both ends in the vehicle width direction of the cowl panel 38. The cowl side members 52 constitute a part of a structural body that supports a suspension (not shown).

Referring to Fig. 1, a hood inner panel 54 is provided on the lower surface at the rear portion of the hood 10. The cross section of the hood inner panel 54 is of the shape of a hat with its opening facing up. A front flange 54A formed at the front of the opening is bonded to a bottom surface 10A of the hood 10. A rear flange 54B formed in the rear of the opening of the hood inner panel 54 is secured to a rear edge portion 10 of the hood 10 through hemming.

The cowl panel 38 that extends across the width of the vehicle has a side section shaped like a hat with its opening facing up. A flange 38B is formed substantially forward at the upper end portion of a front vertical wall portion 38A of the cowl panel 38. A hood seal mounting portion 12B, which is formed integrally with the front end portion of the cowl louver 12, is placed and held in position on the flange 38B of the cowl panel 38. The hood seal mounting portion 12B is provided with a hood seal 56.

A front portion 12D of an outer ornamental portion 12C of the cowl louver 12 is protruded upward of the bolt 22 that extends upward. This allows the front portion 12D of the cowl louver 12 to remain generally flush with the hood 10. Furthermore, ribs 58 are formed on the bottom surface side of the front portion 12D of the cowl louver 12 as energy absorbing means for absorbing energy generated when the cowl louver 12 receives a impact load. A plurality of ribs 58 are formed at predetermined intervals along the width of the vehicle, extending in the longitudinal direction of the vehicle. In addition, each rib 58 is formed between adjacent slits 14 to keep the opening area of the slit unchanged. An abutting portion 58A formed on the rear end bottom of the rib 58 abuts against the upper front surface 28A of the pivot axis supporting member 28. When a colliding body 60 abuts against the outer ornamental portion 12C of the cowl louver 12 from generally above (direction of arrow A in Fig. 1), the load is transmitted to the cowl panel 38 via the ribs 58, pivot axis supporting member 28, and the bracket 40 or bracket 44 such that the rib 58 deforms.

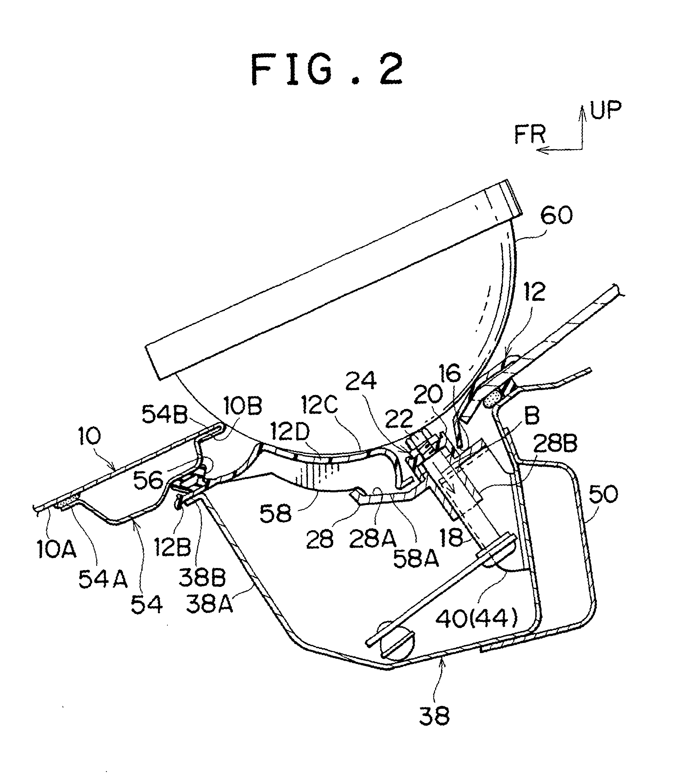

The wiper pivot 18 passes through a supporting member 28B of a cylindrical shape formed in the pivot axis supporting member 28. When the load exceeding a predetermined level in the pivot axis direction (direction of arrow B) acts on the wiper pivot 18, it is disengaged from the pivot axis supporting member 28. In this case, the wiper pivot 18 moves generally downward (direction of arrow B) of the pivot axis supporting member 28 as shown in Fig. 2.

The effects of the first embodiment will then be explained.

Referring to Fig. 1, approaching the wiper pivot 18 from substantially above (direction of arrow A in Fig. 1), the colliding body 60 first abuts against the outer ornamental portion 12C of the cowl louver 12. The load resulting from the colliding body 60 is, therefore, transmitted to the cowl panel 38 which is a part of the vehicle body via the ribs 58 of the cowl louver 12, pivot axis supporting member 28, and the bracket 40 or bracket 44. As a result, the ribs 58 deform so as to appropriately absorb energy exerted from the colliding body 60. Therefore, impact energy is absorbed appropriately by the rib 58 that is the energy absorbing means and is provided in a transmission path through which the load is transmitted from the cowl louver 12 to the vehicle body.

Referring to Fig. 2, when the colliding body 60 abuts against the bolt 22 of the wiper pivot 18 to cause the load exceeding a predetermined level to act on the wiper pivot 18 in the direction of the pivot axis (direction of arrow B), the wiper pivot 18 moves toward arrow B relative to the pivot axis supporting member 28. The area surrounding the through hole 16 in the cowl louver 12 are fractured, which causes the wiper arm assembly 20 to abut against the pivot axis supporting member 28 and stop. During this period through which the wiper pivot moves, the ribs 58 of the cowl louver 12 continue deforming such that the impact energy received from the colliding body 60 is absorbed.

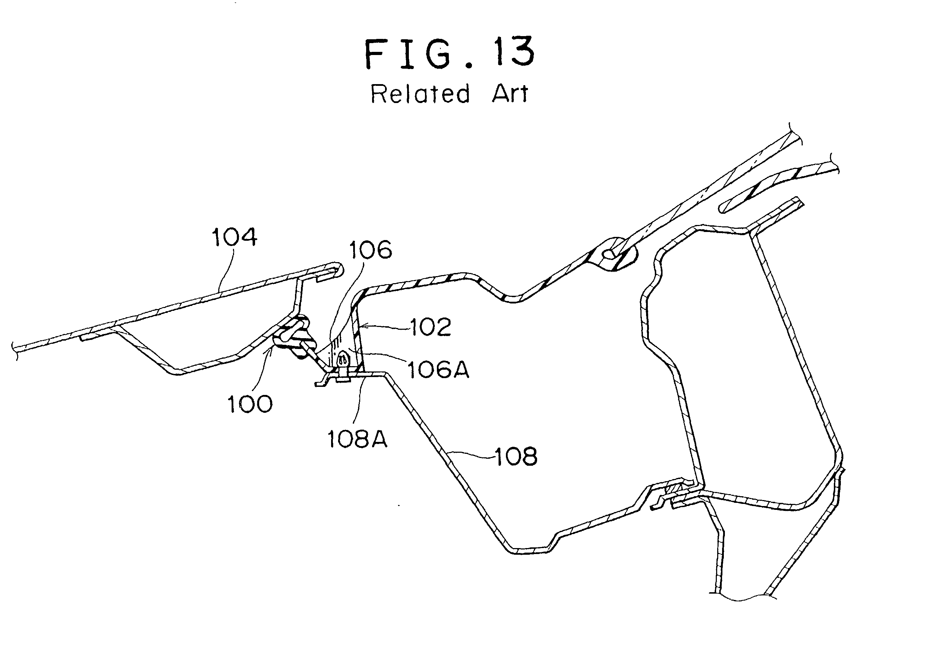

Namely, in the first embodiment, a impact load applied from above can be transmitted from the cowl louver 12 to the wiper link assembly 24 and, at the same time, the cowl louver 12 is securely supported by the pivot axis supporting member 28. This causes the ribs 58 to deform so as to effectively absorb impact energy. As a result, the energy absorbing effect can be enhanced by the first embodiment as compared with the prior art shown in Figs. 13 and 14.

In the first embodiment, the ribs 58 and the pivot axis supporting member 28 are provided and supported near the wiper pivot 18. This arrangement may deform the ribs 58 effectively so as to further enhance the impact energy absorbing effect.

In the first embodiment, the wiper link assembly 24 is supported to the cowl panel 38 around the wiper pivot 18, which forms a closed-section structure serving as a vehicle body frame by the brackets 40, 44. As a result, the load from generally above is also transmitted from the cowl louver 12 to the vehicle body through the wiper link assembly 24.

Further in the first embodiment, impact energy absorbing performance can be easily adjusted by simply changing the wall thickness and the number of ribs 58.

In the first embodiment, since the wiper pivot 18 is slidable downward with respect to the impact load applied generally from above, energy absorbing performance can be optimized by adjusting the impact load required for the start of the sliding motion and the wall thickness and the number of ribs 58.

In the first embodiment, a plurality of ribs 58 placed at predetermined intervals along the width of the vehicle are provided in the cowl louver 12. This allows enhancement of the energy absorbing effect without reducing the area of the openings in the slits 14 for admitting outside air in the cowl louver 12.

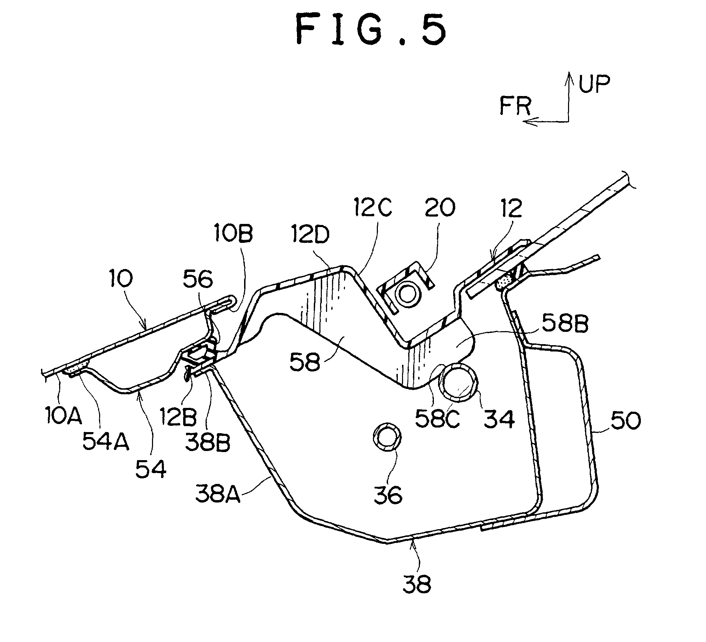

Referring to Fig. 5, an abutting portion 58C formed on an extended portion 58B that extends rearward of the cowl louver 12 may be abutted against the rods 34 functioning as supporting means to connect the right and left pivot axis supporting members 28. In this case, the impact load from above is transmitted to the rods 34 functioning a positive support can be given to the cowl louver 12 which is supported also by the rods 34. In this case, the load is transmitted from the cowl louver 12 to the vehicle body through the ribs 58 (the extended portion 58B) that is a part of cowl louver 12 and the rod 34. Therefore, impact energy is absorbed appropriately by the rib 58 (the extended portion 58B) that is the energy absorbing means and is provided in the transmission path.

Instead of providing the abutting portion and supporting means near the wiper pivot, it is also possible to use only the supporting means that connects the right and left pivot axis supporting members 28 to support the abutting portion of the cowl louver.

### ( Second Embodiment )

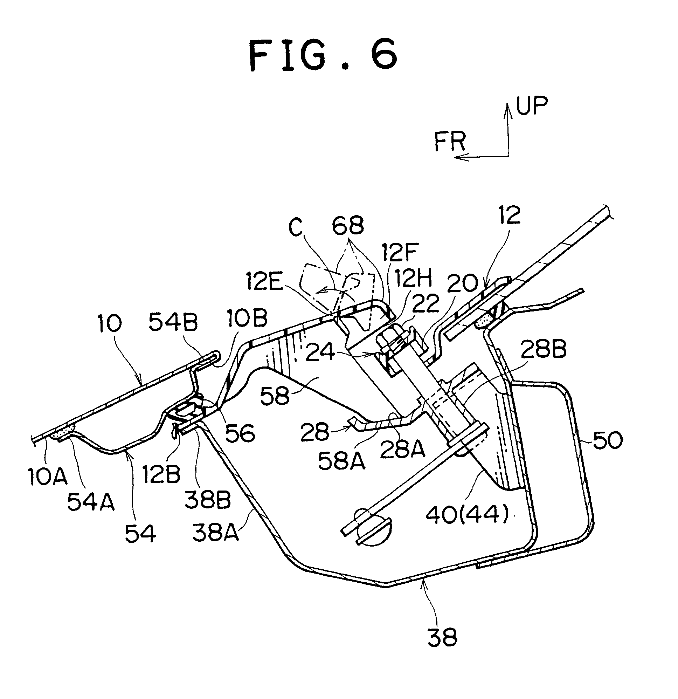

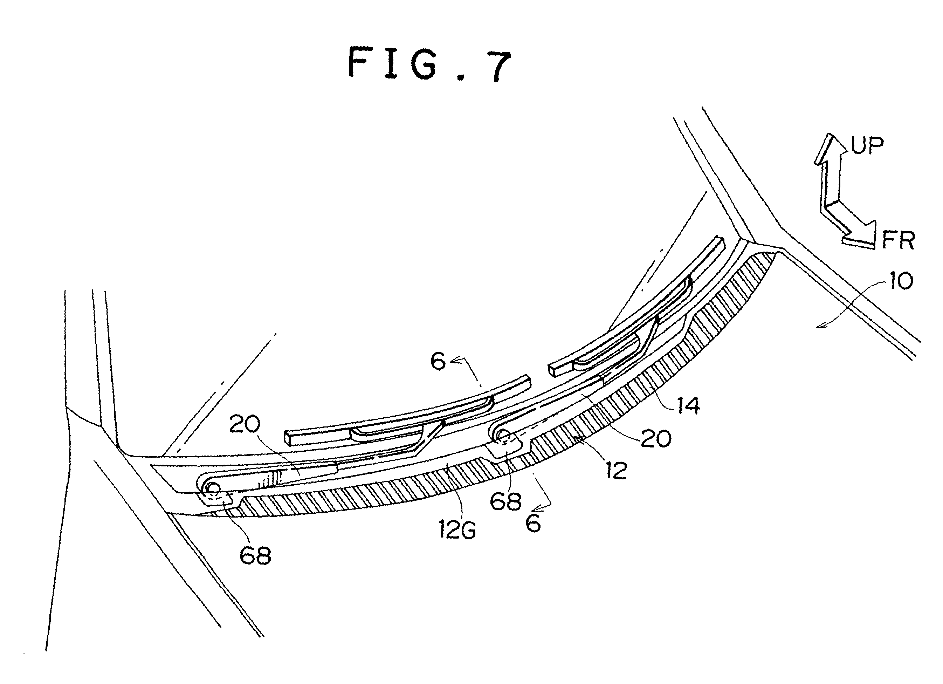

A second embodiment of the vehicle cowl structure according to the invention will be explained with reference to Figs. 6 and 7.

The same members as those in the first embodiment are assigned with the same reference numerals, The explanation for those members, thus, will be omitted.

Referring to Fig. 7, an eaves 12G is formed on the rear edge portion of the cowl louver 12 made of plastic in this second embodiment. Lid portions 68 are formed at the portions in the eaves 12G to face the wiper pivots 18 as members to cover and hide the upper part of the wiper pivots 18.

Referring to Fig. 6, the lid portion 68 is integrally formed with the cowl louver 12. The lid portion 68 pivotally rotates substantially forward (direction of arrow C in Fig. 6) about an integral hinge 12E so as to be moveable to positions indicated by the chain line and chain double-dotted line in Fig. 6. A rib 12F is formed on the bottom surface side of the lid portion 68. An abutting portion 12H is formed on the lower part of the rib 12F. The rib 12F is designed to deform when the abutting portion 12H is brought into abutment against the bolt 22.

The effects of the second embodiment will then be explained. In addition to the effects of the first embodiment, the following effects are provided by the second embodiment.

Since the wiper pivots 18 are covered by the lid portions 68 of the cowl louver 12, the outer appearance may be improved in the state where the wipers are stored. The bolts 22 can be easily removable by moving the lid portions 68 in generally forward (direction of arrow C in Fig. 6) about the integral hinges 12E to move them to the positions indicated by the chain line of Fig. 6.

Further, since the lid portions 68 exists between a colliding body 60 (referring to fig.1) and the bolt 22, it is prevented that the colliding body 60 touches the bolt 22. As a result, the shock that the colliding body 60 may receive is reduced, when the wiper pivot 18 moves generally downward. Further, in the second embodiment, the lid portions 68 are integrally formed with the cowl louver 12, eliminating the need of any additional new parts. Further, a load applied from the colliding body 60 to the lid portions 68 that are a part of the cowl louver 12 is transmitted from the lid portions 68 to the vehicle body through the ribs 12F and the wiper device. Therefore, impact energy is absorbed appropriately by the rib 12F that is an energy absorbing means and is provided in the transmission path.

### ( Third Embodiment )

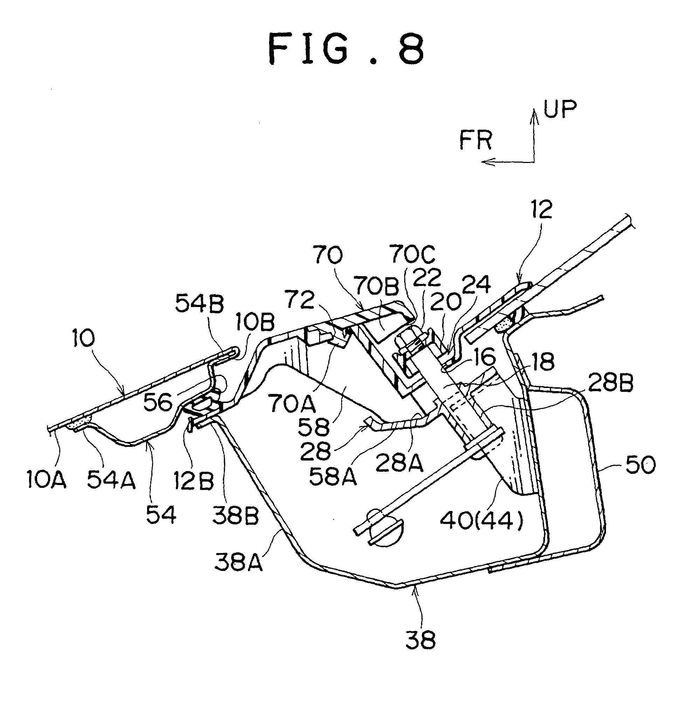

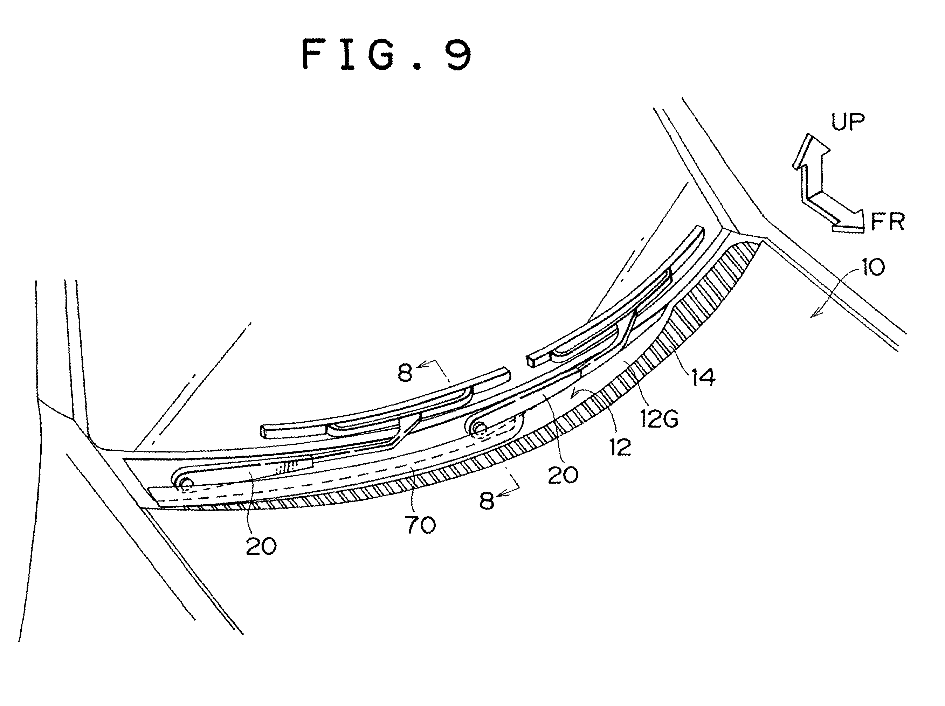

A third embodiment of the vehicle cowl structure according to the invention will be explained with reference to Figs. 8 and 9.

The same members as those used for the first embodiment are assigned with the same reference numerals. The explanation for those members, thus, will be omitted.

Referring to Fig. 9, an eaves 12G is formed on the rear edge portion of the cowl louver 12 made of plastic in this third embodiment. A panel 70 made of plastic is placed in a prescribed manner that functions as a member to cover and hide the upper part of the wiper pivots 18 at the portions in the eaves 12G to face the wiper pivots 18. The panel 70 extends from generally the center of the width of the vehicle to a point near the right edge portion thereof. This panel 70 constitutes a part of the cowl louver 12.

Referring to Fig. 8, a plurality of clip portions 70A are formed on the lower surface at the front of the panel 70 at predetermined intervals along the width of the vehicle. These clip portions 70A are engaged with a plurality of mounting holes 72 formed in the cowl louver 12. These clip portions 70A also allow the panel 70 to be attachable to and removable from the cowl louver 12. A rib 70B is formed on the lower surface to the rear of the panel 70. An abutting portion 70C is formed on the lower portion of the rib 70B. The rib 70B is designed to deform when the abutting portion 70C is brought into abutment against the bolt 22.

The effects of the third embodiment will be explained.

In addition to the effects of the first embodiment, the following effects can be obtained from the third. Since the wiper pivots 18 are covered by the panel 70 mounted to the cowl louver 12, outer appearance can be improved in the state where the wipers are stored. The bolts 22 can be easily detachable by removing the panel 70 from the cowl louver 12.

Further, since the panel 70 exists between a colliding body 60 (referring to fig.1) and the bolt 22, it is prevented that the colliding body 60 touches the bolt 22. As a result, the shock that the colliding body 60 may receive is reduced, when the wiper pivot 18 moves generally downward. Further, a load applied from the colliding body 60 to the panel 70 that is a part of the cowl louver 12 is transmitted from the panel 70 to the vehicle body through the ribs 70 and the wiper device. Therefore, impact energy is absorbed appropriately by the rib 70B that is an energy absorbing means and is provided in the transmission path.

Further, in the third embodiment, the panel 70 is formed of a part attachable to and removable from the cowl louver 12. Therefore the shape of the cowl louver 12 becomes less complicated compared with the case of the second embodiment. This may prevent the die structure of the cowl louver 12 from being complicated.

### ( Fourth Embodiment )

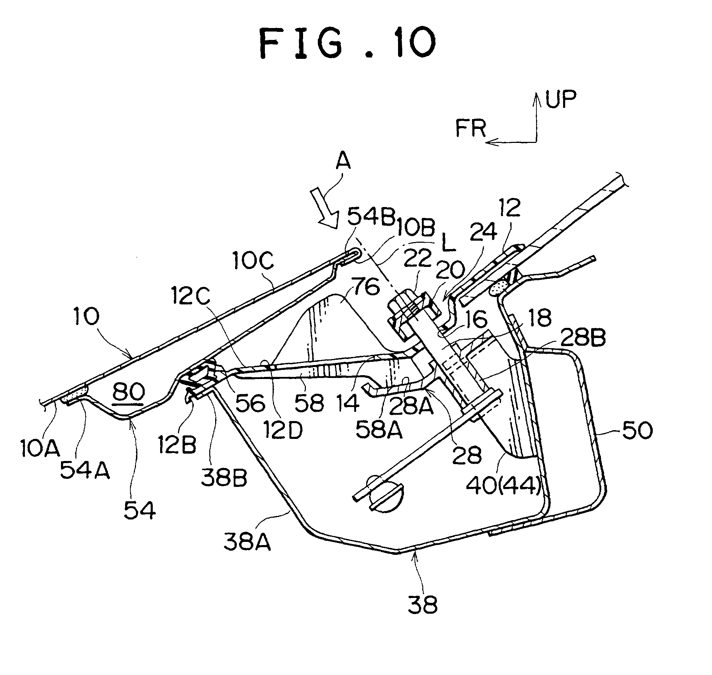

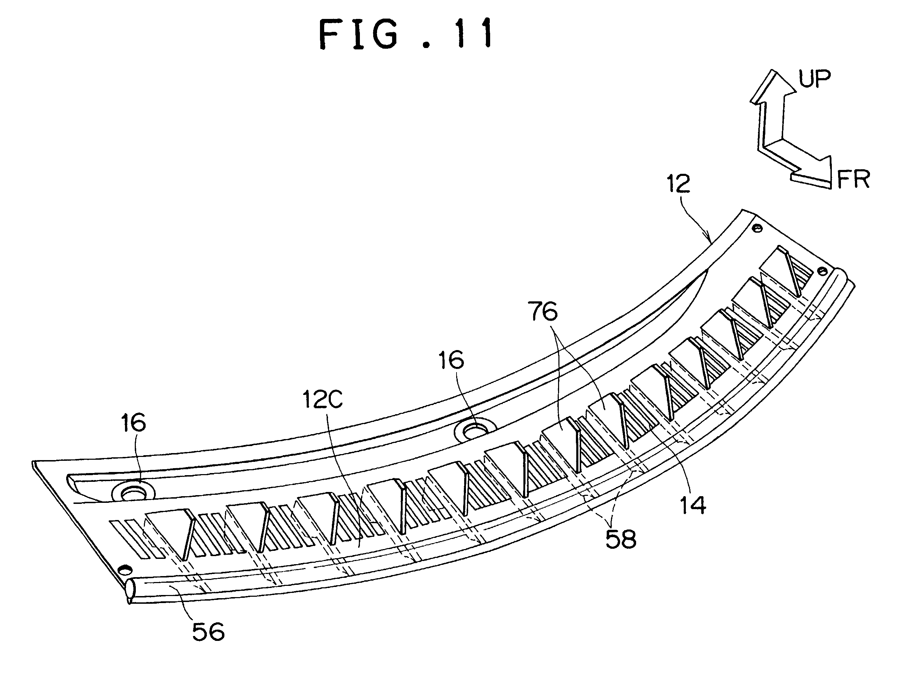

A fourth embodiment of the vehicle cowl structure according to the invention will be explained with reference to Figs. 10 and 11.

The same members as those of the first embodiment are assigned with the same reference numerals. The explanation for those members, thus, will be omitted.

Referring to Fig. 10, in the fourth embodiment, the front portion of the cowl louver 12 made of plastic is substantially covered by a rear edge portion 10C of the hood 10. The rear edge portion 10C of the hood 10 substantially covers an area near an extension line L of the axis of the wiper pivot 18. A rear frame portion 80 of the hood 10 exhibiting required rigidity in the rear thereof is set at a position away forward of the rear edge of the hood 10 so as not to interfere with admission of the outside air to the slits 14 in the cowl louver 12.

Further in the fourth embodiment, a front portion 12D of the outer ornamental portion 12C of the cowl louver 12 is formed into a generally flat shape. On the top surface of the front portion 12D, there are a plurality of ribs 76 extending in the longitudinal direction of the vehicle toward the hood 10 formed at predetermined intervals at the same positions as those of the ribs 58 in the direction of the vehicle width. The ribs 76 protrude further upward of the bolts 22.

Referring to Fig. 11, each of the ribs 76 is formed between adjacent slits 14. As a result, the area of openings in the slits 14 cannot be reduced.

The effects of the fourth embodiment will be explained.

In addition to the effects of the first embodiment, the following effects are obtained by the fourth embodiment.

Referring to Fig. 10, when the colliding body 60 (see Fig. 1) abuts against the rear edge portion 10C of the hood 10 from generally above (direction of arrow A in Fig. 10) to deform the rear edge portion 10C of the hood 10, the ribs 76 abut against the rear edge portion 10C. The load from the colliding body 60 is, therefore, transmitted via the hood 10, ribs 76 of the cowl louver 12, ribs 58, pivot axis supporting member 28, and the bracket 40 or bracket 44 to the cowl panel 38 that is a part of the vehicle body. As a result, the ribs 76 and ribs 58 effectively deform and the energy received from the colliding body 60 is effectively absorbed from the initial period when the load from the colliding body 60 is exerted to the rear edge portion 10C of the hood 10. Therefore, impact energy is absorbed appropriately by the ribs 76, 58 that is the energy absorbing means and is provided in a transmission path through which the load is transmitted from hood 10 to cowl panel 38.

Furthermore, since the ribs 76, 58 are formed at predetermined intervals along the width of the vehicle between adjacent slits 14 in the fourth embodiment, the area of openings in the slits 14 is not reduced. This may enhance energy absorbing effect without reducing the area of openings for admitting outside air into the cowl louver.

In the fourth embodiment, the front portion of the cowl louver 12 is substantially covered by the rear edge portion 10C of the hood 10. This contributes to an improved outer appearance of the areas around the cowl louver 12 in the state where the wipers are stored.

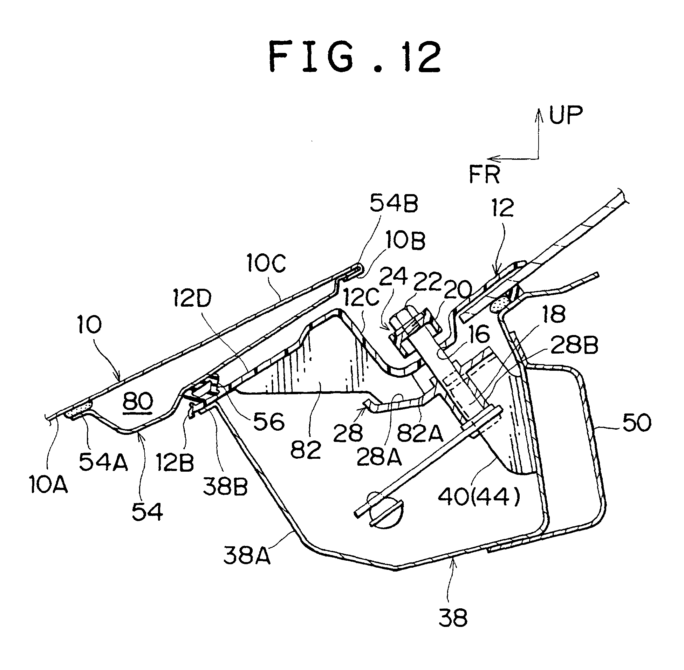

In the fourth embodiment, the front portion 12D of the outer ornamental portion 12C of the cowl louver 12 is formed into a generally flat shape. Alternatively, another construction is possible as detailed below. Referring to Fig. 12, the front portion 12D of the outer ornamental portion 12C of the cowl louver 12 may be protruded toward the rear edge portion 10C of the hood 10, thus forming ribs 82 on the lower surface of the front portion 12D instead of the ribs 58, ribs 76.

In the first to the fourth embodiments, an arrangement has been provided, in which the cowl louver before exertion of the impact load is brought into abutment against the supporting means. Such a construction permits the cowl louver to effectively absorb energy during the initial period of exertion of the impact load to the cowl louver. Needless to say, the abutting portion is not abutted against the supporting means before application of the impact load. The cowl louver in this invention may not be made plastic, and may be made metal or others. In the aforementioned embodiments, at least a part of the cowl louver is provided generally upward of the wiper device. The phrase "generally upward" in this invention refers to the direction in which the colliding body applies its impact load to the wiper device.

The ribs 58, 12F, 70B, 76, 82 in the embodiments comprise part of the cowl louver of this invention. They also correspond to an energy absorbing means of the invention.

These explanations represent specific embodiments of the present invention. It will be readily understood by one skilled in the art that the invention is not limited to these embodiments and other modifications of applications are possible within the scope of the claims. For example, it is possible to combine two or more of the first embodiment, second embodiment, third embodiment, and the fourth embodiment.

The shapes of the ribs 58, 76, 82 are not limited to those shown in Figs. 1, 10, and 12. The ribs 58, 76, 82, 12, 70 are not limited to those provided in the cowl louver as in said embodiments and they may even be ones provided in a supporting means. Furthermore, they may not necessarily be ribs; they may be hollow pipes made of foam plastic or aluminum alloy. The energy absorbing means is not limited to the ribs. The pivot axis supporting member 28 and rod 34, as they are used in the embodiments, may also be designed to deform upon exertion of the load. In this case, however, supporting means for supporting the pivot axis supporting member 28 and rod 34 will become necessary. Such a supporting means may be integrally formed with, or separate from, the pivot axis supporting member 28 and rod 34.

The mechanism, in which the wiper pivot 18 slides downward as it receives a load applied from generally above, may be another mechanism shown in Fig. 14 or the like.

The outside of the cowl louver may further be provided with an energy absorbing material. Namely, the cowl louver of the invention is not necessarily disposed on the outermost side of the vehicle.

The "supporting means" according to the invention is not limited to the one integrated with a member securing the wiper device (corresponding to the brackets 40, 44 in the embodiments) or the wiper device itself (corresponding to the rod 34 in the embodiments). For example, the supporting means may be separate from, or adjacent to, the wiper device. The "supporting means" according to the invention includes the wiper device itself, supporting means provided the wiper device itself and supporting means provided around the wiper device.

The wiper device may be supported by a vehicle body with the energy absorbing means interposed between the wiper device and the vehicle body.

So long as the cowl louver is so designed to be supported by the supporting means at least when the cowl louver is displaced, there may be a clearance between the cowl louver and the supporting means before exertion of the load.

A front portion 12D of an outer ornamental portion 12C of a cowl louver 12 protrudes upward of a bolt 22 that secures a wiper arm assembly 20. A plurality of ribs 58 extending in the longitudinal direction of the vehicle are formed at predetermined intervals in the vehicle width direction on the lower surface side of the front portion 12D of the cowl louver 12. A rear end lower portion 58A of the rib 58 abuts against the upper surface of the front portion 28A of a pivot axis supporting member 28. When a colliding body 60 abuts against the outer ornamental portion 12C of the cowl louver 12 from generally above, the load is transmitted via the ribs 58 of the cowl louver 12, pivot axis supporting member 28, and brackets 40, 44 to a cowl panel 38.

A front portion (12D) of an outer ornamental portion (12C) of a cowl louver (12) protrudes upward of a bolt (22) that secures a wiper arm assembly (20). A plurality of ribs (58) extending in the longitudinal direction of the vehicle are formed at predetermined intervals in the vehicle width direction on the lower surface side of the front portion (12D) of the cowl louver (12). A rear end lower portion (58A) of the rib (58) abuts against the upper surface of the front portion (28A) of a pivot axis supporting member (28). When an colliding body (60) abuts against the outer ornamental portion (12C) of the cowl louver (12) from generally above, the load is transmitted via the ribs (58) of the cowl louver (12), pivot axis supporting member (28), and brackets (40, 44) to a cowl panel (38).

## Claims

1. A vehicle cowl structure, comprising
a cowl louver that has abutting portions (58A, 58C, 12H, 70C, 82A) and
a wiper device that includes supporting means (28, 34, 22) provided for supporting said abutting portions (58A, 58C, 12H, 70C, 82A) at least when said cowl louver (12) is displaced, wherein energy absorbing means provides at least a part of at least one of said abutting portions (58A, 58C, 12H, 70C, 82A) and said supporting means (28, 34, 22) wherein said wiper device includes right and left wiper pivots (18),
**characterized by**
a connecting member (34) that extends in a vehicle width direction connecting said right and left wiper pivots (18), wherein one of said abutting portions (58C) of said cowl louver (12) is supported by said connecting member (34).

2. A vehicle cowl structure according to claim 1, wherein said wiper device is supported by a vehicle body and said energy absorbing means (58, 12, 70) are provided in a transmission path along which a load applied from the outside of a vehicle to said cowl louver (12) is transmitted to said vehicle body through the abutting portions (58A, 58C, 12H, 70C, 82A) and said supporting means (28, 34, 22).

3. A vehicle cowl structure according to claim 1 or 2, wherein said supporting means (28, 34, 22) is adapted to restrict a displacement of said cowl louver (12).

4. A vehicle cowl structure according to any of claims 1 to 3, wherein
said abutting portions (58A, 58C, 82A) and said supporting means (28, 34) are provided at least in the vicinity of said wiper pivots (18).

5. A vehicle cowl structure according to claim 4, wherein said wiper device is supported by a vehicle body at least in the vicinity of said wiper pivots (18).

6. A vehicle cowl structure according to any of claims 1 to 3, wherein
said cowl louver (12) has covering portions (68, 70) for covering and hiding the upper portion of said wiper pivots (18).

7. A vehicle cowl structure according to claim 6, wherein said covering portions (68) are rotatable with respect to said cowl louver (12) and, at the same time, are integrally formed with said cowl louver (12).

8. A vehicle cowl structure according to claim 6, wherein said covering portion (70) is attachable to and removable from said cowl louver (12).

9. A vehicle cowl structure according to any of claims 1 to 3, wherein
said wiper pivots (18) are slidable downward as the impact load is exerted from above.

10. A vehicle cowl structure according to any one of claims 1 to 9, wherein at least a front portion of said cowl louver (12) is substantially covered by a rear edge portion (10C) of a hood (10) of the vehicle front.

11. A vehicle cowl structure according to claim 10, wherein said cowl louver (12) is provided with a plurality of ribs (76) that extend in the longitudinal direction of the vehicle and that are placed at predetermined intervals along the vehicle width direction at a position in the vicinity of the lower surface of the rear edge portion (10C) of the hood.

12. A vehicle cowl structure according to any one of claims 1 to 11, wherein said cowl louver (12) is provided with a plurality of ribs (58, 76, 82) that extend in the longitudinal direction of the vehicle and that are placed at predetermined intervals along the vehicle width direction.

13. A vehicle cowl structure according to any one of claims 1 to 12, wherein at least a part of said cowl louver (12) is formed generally upward of the wiper device.

## Patentansprüche

1. Fahrzeugverkleidungsaufbau mit
einer Verkleidungsbelüftungseinrichtung, die Anlageabschnitte (58A, 58C, 12H, 70C, 82A) hat und
einer Wischervorrichtung, die eine Stützeinrichtung (28, 34, 22) hat, die vorgesehen ist, um die Anlageabschnitte (58A, 58C, 12H, 70C, 82A) zumindest dann zu stützen, wenn die Verkleidungsbelüftungseinrichtung (12) versetzt ist, wobei
eine Energieabsorptionseinrichtung zumindest einen Teil von zumindest entweder den Anlageabschnitten (58A, 58C, 12H, 70C, 82A) oder eine Stützeinrichtung (28, 34, 22) vorsieht, wobei
die Wischervorrichtung einen rechten und einen linken Wischerzapfen (18) hat,
**dadurch gekennzeichnet, dass**
ein Verbindungsteil (34), das sich in Fahrzeugbreitenrichtung erstreckt, den rechten und linken Wischerzapfen (18) verbindet,
wobei
einer der Anlageabschnitte (58C) der Verkleidungsbelüftungseinrichtung (12) durch das Verbindungsteil (34) gestützt ist.

2. Fahrzeugverkleidungsaufbau gemäß Anspruch 1, wobei
die Wischervorrichtung durch eine Fahrzeugkarosserie gestützt ist und die Energieabsorptionseinrichtungen (58, 12, 70) in einer Übertragungsbahn vorgesehen sind, entlang der eine Last, die von außerhalb des Fahrzeugs auf die Verkleidungsbelüftungseinrichtung (12) aufgebracht wird, auf die Fahrzeugkarosserie durch die Anlageabschnitte (58A, 58C, 12H, 70C, 82A) und die Stützeinrichtung (28, 34, 22) übertragen wird.

3. Fahrzeugverkleidungsaufbau gemäß Anspruch 1 oder 2, wobei
die Stützeinrichtung (28, 34, 22) daran angepasst ist, dass sie eine Verschiebung der Verkleidungsbelüftungseinrichtung (12) beschränkt.

4. Fahrzeugverkleidungsaufbau gemäß einem der Ansprüche 1 bis 3, wobei
die Anlageabschnitte (58A, 58C, 82A) und die Stützeinrichtung (28, 34) zumindest in der Nähe der Wischerzapfen (18) vorgesehen sind.

5. Fahrzeugverkleidungsaufbau gemäß Anspruch 4, wobei
die Wischervorrichtung durch eine Fahrzeugkarosserie zumindest in der Nähe der Wischerzapfen (18) gestützt ist.

6. Fahrzeugverkleidungsaufbau gemäß einem der Ansprüche 1 bis 3, wobei
die Verkleidungsbelüftungseinrichtung (12) Abdeckabschnitte (68, 70) zum Abdecken und Verbergen des oberen Abschnitts der Wischerzapfen (18) hat.

7. Fahrzeugverkleidungsaufbau gemäß Anspruch 6, wobei
die Abdeckabschnitte (68) drehbar bezüglich der Verkleidungsbelüftungseinrichtung (12) sind und gleichzeitig mit der Verkleidungsbelüftungseinrichtung (12) einstückig ausgebildet sind.

8. Fahrzeugverkleidungsaufbau gemäß Anspruch 6, wobei
der Abdeckabschnitt (70) an der Verkleidungsbelüftungseinrichtung (12) anbringbar und von dieser entfernbar ist.

9. Fahrzeugverkleidungsaufbau gemäß einem der Ansprüche 1 bis 3, wobei
die Wischerzapfen (18) nach unten gleitfähig sind, wenn die Stoßlast von oben aufgebracht wird.

10. Fahrzeugverkleidungsaufbau gemäß einem der Ansprüche 1 bis 9, wobei
zumindest ein vorderer Abschnitt der Verkleidungsbelüftungseinrichtung (12) im Wesentlichen durch einen hinteren Randabschnitt (10C) einer Haube (10) des Fahrzeugvorderteils abgedeckt ist.

11. Fahrzeugverkleidungsaufbau gemäß Anspruch 10, wobei
die Verkleidungsbelüftungseinrichtung (12) mit einer Vielzahl an Rippen (76) versehen ist, die sich in Längsrichtung des Fahrzeugs erstrecken und die bei vorbestimmten Abständen entlang der Fahrzeugbreitenrichtung, an einer Position in der Nähe der unteren Fläche des hinteren Randabschnitts (10C) der Haube angeordnet sind.

12. Fahrzeugverkleidungsaufbau gemäß einem der Ansprüche 1 bis 11, wobei
die Verkleidungsbelüftungseinrichtung (12) mit einer Vielzahl an Rippen (58, 76, 82) versehen ist, die sich in Längsrichtung des Fahrzeugs erstrecken und die bei vorbestimmten Abständen entlang der Fahrzeugbreitenrichtung angeordnet sind.

13. Fahrzeugverkleidungsaufbau gemäß einem der Ansprüche 1 bis 12, wobei
zumindest ein Teil der Verkleidungsbelüftungseinrichtung (12) im Allgemeinen oberhalb der Wischervorrichtung ausgebildet ist.

## Revendications

1. Structure d'auvent de véhicule, comprenant
une grille d'auvent qui comporte des parties de butée (58A, 58C, 12H, 70C, 82A), et
un dispositif d'essuie-glace qui comprend un moyen de support (28, 34, 22) prévu pour supporter les deux parties de butée (58A, 58C, 12H, 70C, 82A) au moins lorsque ladite grille d'auvent (12) est déplacée, où un moyen d'absorption d'énergie constitue au moins une partie d'au moins un élément parmi lesdites parties de butée (58A, 58C, 12H, 70C, 82A) et ledit moyen de support (28, 34, 22), où ledit dispositif d'essuie-glace comprend des pivots d'essuie-glaces gauche et droit (18),
**caractérisée par**
un élément de raccordement (34) qui s'étend dans le sens de la largeur du véhicule, reliant lesdits pivots d'essuie-glaces droit et gauche (18), où l'une desdites parties de butée (58C) de ladite grille d'auvent (12) est supportée par ledit élément de raccordement (34).

2. Structure d'auvent de véhicule selon la revendication 1, dans laquelle ledit dispositif d'essuie-glace est supporté par une caisse de véhicule et ledit moyen d'absorption d'énergie (58, 12, 70) est disposé dans un trajet de transmission suivant lequel une charge appliquée depuis l'extérieur d'un véhicule à ladite grille d'auvent (12) est transmise à ladite caisse de véhicule par l'intermédiaire des parties de butée (58A, 58C, 12H, 70C, 82A) et desdits moyens de support (28, 34, 22).

3. Structure d'auvent de véhicule selon la revendication 1 ou 2, dans laquelle ledit moyen de support (28, 34, 22) est conçu pour limiter le déplacement de ladite grille d'auvent (12).

4. Structure d'auvent de véhicule selon l'une quelconque des revendications 1 à 3, dans laquelle
lesdites parties de butée (58A, 58C, 82A) et ledit moyen de support (28, 34) sont disposés au moins à proximité desdits pivots d'essuie-glaces (18).

5. Structure d'auvent de véhicule selon la revendication 4, dans laquelle ledit dispositif d'essuie-glace est supporté par la caisse de véhicule au moins à proximité desdits pivots d'essuie-glaces (18).

6. Structure d'auvent de véhicule selon l'une quelconque des revendications 1 à 3, dans laquelle
ladite grille d'auvent (12) comporte des parties de recouvrement (68, 70) destinées à recouvrir et cacher la partie supérieure desdits pivots d'essuie-glaces (18).

7. Structure d'auvent de véhicule selon la revendication 6, dans laquelle lesdites parties de recouvrement (68) peuvent tourner par rapport à ladite grille d'auvent (12) et, en même temps, sont formées en une seule pièce avec ladite grille d'auvent (12).

8. Structure d'auvent de véhicule selon la revendication 6, dans laquelle ladite partie de recouvrement (70) peut être fixée à ladite grille d'auvent (12) et peut être enlevée de celle-ci.

9. Structure d'auvent de véhicule selon l'une quelconque des revendications 1 à 3, dans laquelle
lesdits pivots d'essuie-glaces (18) peuvent coulisser vers le bas lorsque la charge d'impact est exercée depuis le dessus.

10. Structure d'auvent de véhicule selon l'une quelconque des revendications 1 à 9, dans laquelle au moins une partie avant de ladite grille d'auvent (12) est pratiquement recouverte par une partie de bord arrière (10C) d'un capot (10) de l'avant du véhicule.

11. Structure d'auvent de véhicule selon la revendication 10, dans laquelle ladite grille d'auvent (12) est munie d'une pluralité de nervures (76) qui s'étendent dans le sens longitudinal du véhicule et qui sont placées à des intervalles prédéterminés suivant le sens de la largeur du véhicule à une position à proximité de la surface inférieure de la partie de bord arrière (10C) du capot.

12. Structure d'auvent de véhicule selon l'une quelconque des revendications 1 à 11, dans laquelle ladite grille d'auvent (12) est munie d'une pluralité de nervures (58, 76, 82) qui s'étendent dans le sens longitudinal du véhicule et qui sont positionnées à des intervalles prédéterminés suivant le sens de la largeur du véhicule.

13. Structure d'auvent de véhicule selon l'une quelconque des revendications 1 à 12, dans laquelle au moins une partie de ladite grille d'auvent (12) est formée généralement en haut du dispositif d'essuie-glace.
